# EUROPEAN PATENT APPLICATION

(11) **EP 3 671 600 A1**
(43) Date of publication of application: **24.06.2020**
(21) Application number: 18215669.5
(22) Date of filing: 21.12.2018
(51) Int. Cl.: G06Q 20/02, G06Q 20/08, G06Q 20/32

(54) **METHOD AND SYSTEM FOR IMPLEMENTING A CONDITIONAL PAYMENT TRANSACTION**

(71) Applicant: Equensworldline S.E., 3526 LB Utrecht (NL)
(72) Inventor: SAUER, Jonathan, 1050 Ixelles (BE); MAES, Johan, 3080 Duisburg (BE); AHRIGA,Ahmed, 1030 Bruxelles (BE); VERMEULEN, Alex, 3543 CP Utrecht (NL); CRABTREE, Vernon, 3832 CH LEUSDEN (NL); MUHAMMAD, Ali, 52066 AACHEN (DE)
(74) Representative: Novagraaf Technologies

(57) **Abstract**

A payment platform (SPE) is configured to execute at least one control software component (SPC1, SPC2) that implements a business logic underlying a business transaction, wherein the business transaction includes a payment transaction implemented by a payment infrastructure (PAI1, PAI2). A payment gateway (PGW) is configured to execute at least one payment control functions to provide to the one or more control software components (SPC1, SPC2) a control over a payment transaction. The payment infrastructure (PAI1, PAI2) is further configured to start an execution of a payment transaction, to interrupt (730) the execution of said payment transaction at a predefined transaction step and to wait for at least one trigger from the payment gateway (PGW) before resuming the execution of said payment transaction;

## Description

### TECHNICAL FIELD

The disclosure generally relates to methods, devices and system for implementing a conditional payment transaction.

### BACKGROUND

Payment transactions are more and more used in the end customer activities, especially with the use of software applications by means of which value added services and the payment processing are combined in a very entangled way.

Usually the payment for one or more goods and / or services ordered online by a customer from a merchant is implemented completely separately from the effective delivery of the one or more ordered goods and / or services. Today, customers are forced to pay up in advance and the merchants to accept to be paid afterwards or to rely on a third party to function as an escrow and reserve a predetermined amount. In case of an incomplete and / or erroneous exchange (e.g. exchange of assets, goods and / or services for currency) between the customer/merchant, for example when an error occurs in the processing performed after payment, the delivered product is not the ordered product, the product is not delivered or at a wrong address, the customer is not present for delivery, etc, a dispute may be opened through available mechanisms.

This is generally not a problem for payment implemented by credit cards as fallback mechanisms are in place (e.g. cashback). However, for payment implemented by debit card and credit transfers such technical solutions do not exist. This raises security and trust issues insofar certainty over the complete and / or accurate execution of an exchange implemented partly electronically have to be provided.

There appears also a need for a framework in which the core payment processing and the business transaction are controlled in a fully integrated manner so as to provide a seamless customer experience and a certainty over the complete and / or accurate execution of an exchange between at least two parties to the business transaction.

### SUMMARY

According to a first aspect, the present disclosure relates to a system for implementing a conditional payment transaction according to claim 1.

According to a second aspect, the present disclosure relates to a method for implementing a conditional payment transaction according to claim 6.

According to a third aspect, the present disclosure relates to a computer program product comprising computer readable instructions which, when loaded and executed by a computer, cause the computer to carry out the steps of the method according to the second aspect.

### BRIEF DESCRIPTION OF THE DRAWINGS

The present disclosure will be better understood and its numerous aspects and advantages will become more apparent to those skilled in the art by reference to the following drawings, in conjunction with the accompanying specification, in which:
- FIG. 1 shows a system for implementing a conditional payment transaction in accordance with one or more embodiments;
- FIG. 2 shows a system for implementing a conditional payment transaction in accordance with one or more embodiments;
- FIG. 3 illustrates aspects of a method for implementing a conditional payment transaction for a specific payment flow (a card payment flow) in accordance with one or more embodiments;
- FIGS. 4A-4C illustrate aspects of a method for implementing a payment transaction for a specific payment flows in accordance with one or more embodiments;
- FIGS. 5 illustrates aspects of a method for implementing a conditional payment transaction for a specific payment flow in accordance with one or more embodiments;
- FIGS. 6A-6C illustrate aspects of a method for implementing a payment transaction for a specific payment flows in accordance with one or more embodiments;
- FIGS. 7 shows a flowchart of a method for implementing a conditional payment transaction;
- FIG. 8 illustrates aspects of a method and system for implementing a conditional payment transaction in accordance with an example embodiment;
- FIG. 9 illustrates aspects of a method and system for implementing a conditional payment transaction in accordance with an example embodiment.

The advantages, and other features of the system, method and components disclosed herein, will become more readily apparent to those having ordinary skill in the art. The following detailed description of certain preferred embodiments, taken in conjunction with the drawings, sets forth representative embodiments of the subject technology, wherein like reference numerals identify similar structural elements.

According to one or more embodiments, a payment system and method for implementing a payment on delivery (POD) transaction are described herein. The payment system and method provide to the customer and merchant the guaranty that a payment will only take place if one or more trigger conditions (e.g. physically verifiable conditions) are fulfilled on delivery.

The payment platform may for example verify that one or more trigger conditions are fulfilled on the basis of delivery information received from the interconnected software application.

The trigger condition may for example be fulfilled / controlled by a third party (e.g. the delivery company) distinct from the customer and the merchant. The trigger condition may for example be that the delivery company and the customer both confirm (e.g. to the SPE platform) the delivery of the ordered goods using a software application interconnected with the payment platform. The trigger condition may alternatively be that the delivery company (or deliverer) confirms the delivery of the ordered goods and the buyer did not dispute the delivery within a given deadline (e.g. within 24h).

The financial flow for goods ordered by a customer may thus be efficiently synchronized and adapted to one or more events that may happen during the delivery of the goods to the customer in a seamless user experience.

One or more software applications interconnected with the payment platform may be used to provide to the control software component the delivery information regarding one or more event(s) occurring during the delivery phase. The one or more software applications may for example be used on customer side and / or on delivery company side. Any messaging protocol / notification method may be used between the software applications interconnected with the payment platform and the control software component to send the delivery information.

Authentication of the user of the remote device that confirms the delivery of goods may be performed before resuming the payment transaction. Authentication of the user may be performed using same credentials and / or same user account as the credentials and / or user account used for ordering the goods. For example, a customer web application connected to a merchant web server may be used to order goods and also confirm the delivery.

On one or more embodiments, distinct trigger conditions may be successively checked to trigger respective distinct operations of a payment transaction. For example, distinct trigger conditions may be successively checked and the next operations of the payment transaction to be triggered may be selected in dependence upon the trigger condition which is fulfilled. For example a first trigger condition has to be fulfilled before a first deadline in order to trigger a payment with a first amount. If the first trigger condition is not fulfilled within the first deadline, then a second trigger condition has to be fulfilled before a second deadline in order to trigger a payment with a second amount (e.g; the second amount may be reduced compared to the first amount). If the second trigger condition is not fulfilled within the second deadline, then no payment may occur.

Certainty of the payment and transfer of ownership of what one is paying for should take place in an atomic way without giving up privacy of a given part of the business transaction with respect to actors not participating to this given part. For example, in case of goods ordered on line, the delivery company need not to be aware of the amount paid for the goods and how the payment was implemented between the buyer and the seller.

In one or more embodiment, the amount to be paid is reserved on an escrow account upon confirmation of the order for goods. The amount to be paid may be transferred from an account of the customer to the escrow account owned by the bank of the customer. The payment transaction is interrupted after transfer of the amount to be paid from an account of the customer to the escrow account. The payment is released only when the payment transaction is resumed, e.g. upon receipt of a predefined trigger by the payment infrastructure. Payment may only be released from the escrow account to the merchant for example on acceptance of the products by the customer and / or when the agreed/chosen acceptance period has expired. Thus money may be refunded from the escrow account to the customer for example on receipt of the returned product by the merchant. Due to the open payment platform, a seamless e-commerce to delivery user experience is achieved from customer point of view.

From merchant point of view, payment may only be released from the escrow account directly after acceptance of the products by the customer. The system provides increases trust in merchant / on line services. In case the returned product has been accepted by the merchant, refund may automatically be executed from the escrow account to the customer without additional refund costs.

From delivery company point of view, the shipment costs may be released from the escrow account to delivery company directly and automatically after acceptance of the products by the customer. As payment to the escrow account has already been made, no payment needs to be done on receipt of the goods.

Further details will be given below with reference to functions, engines, block diagrams and flowchart illustrations of the methods, systems, and computer program according to one or more exemplary embodiments. Each described function, engine, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media includes, but are not limited to, both computer storage media and communication media including any medium that facilitates transfer of a computer program from one place to another. Specifically, software instructions or computer readable program code to perform embodiments described herein may be stored, temporarily or permanently, in whole or in part, on a non-transitory computer readable medium of a local or remote storage device including one or more storage media.

The systems described herein may be used for implementing shared inter-company processes between for example buyer, seller, shipper, financial institution (bank, insurance, ..), without the costs due to individual contracting with each buyer/seller separately. Instead, the business logic is implemented by using one or more control software component(s) supported by a central payment platform that interconnects with payment infrastructures.

The systems may for example be used to offer services in a dynamic way with ad-hoc business logic and corresponding control software components that relies on external payment infrastructure complying with existing regulations / specifications in the field of payments. The payment infrastructures may be used to control one or more assets.

The present method, devices and systems for implementing conditional payment transactions may be used for several example use cases. For example, a washing machine is installed by a third party and paid for after installation. Later in the life cycle of the washing machine, service is needed, different service providers can offer their service (market model) and the customer contracts the servicing. Another example of a business transaction could be the sale of the asset, which results in the transfer of the asset to a new owner where another payment can be involved.

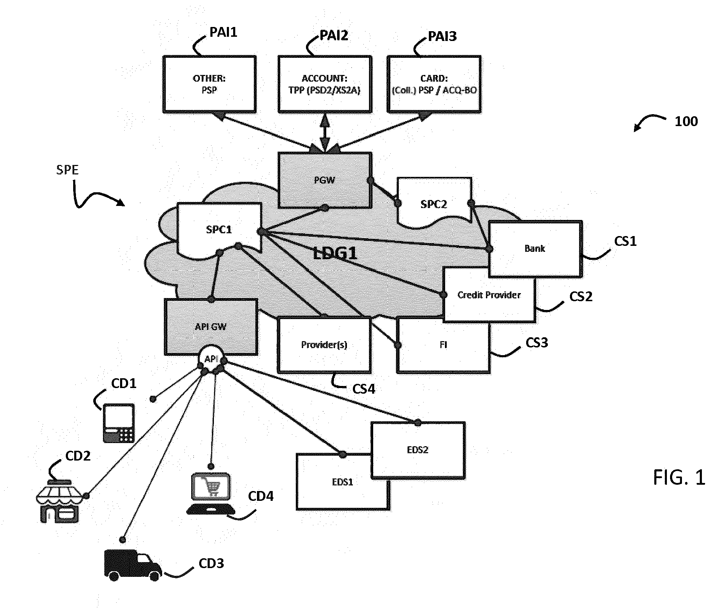

FIG. 1 shows an example system 100 for implementing a conditional payment transaction. The system 100 may include: a payment platform (SPE) also referred to therein as the Smart Payment Engine or SPE platform, a Payment Gateway (PGW), an API gateway (AGW), a main ledger (LDG1), one or more payment infrastructures (PAI1, PAI2, PAI3), one or more collecting devices (CD1, CD2, CD3, CD4), one or more detection systems (EDS1, EDS2). In one or more embodiments, the system 100 may include sub/ anchor ledgers interconnected with the main ledger (LDG1).

The SPE platform is implemented as a platform through which several parties may collaborate for implementing a business transaction. The business transaction may for example include a conditional payment transaction and one or more other transactions on top of the conditional payment transaction. The business transaction may for example include several conditional payment transactions and one or more other transactions that are defined on top of the conditional payment transaction or that define relationships between the different payment transactions. Each transaction may be implemented between part of the parties or all the parties. A payment transaction may involve one or more financial flows on one or more assets.

A conditional payment transaction refers herein for example to a payment transaction that is implemented (e.g. authenticated, controlled, executed, authorized, cleared, settled, etc) in dependence upon one or more conditions. For example, one or more transaction steps of the payment transaction are triggered only when one or more conditions (e.g. trigger conditions) are met. For example, one or more transaction steps of the payment transaction are executed / adapted in dependence upon whether one or more conditions are fulfilled. For example, the execution of one or more transaction steps may be controlled from the SPE platform: the execution of one or more transaction steps may be triggered without change, i.e. with initial parameter (unchanged amount to be paid, etc) or triggered with one or more modified parameters. For example, a payment by credit card may be cancelled and the debited amount will be credited back: in such a case the execution of the payment transaction may include one or more transaction steps to trigger the credit operation instead of the settlement of the payment. The control over the execution of the payment transaction may be performed in a static or dynamic manner, depending on one or more events. For example, a payment may be settled to one or multiple parties which are participating in the transaction.

The parties of a business transaction may include one or more financial institutions (e.g. a bank, a credit provider, or other types of financial institution), one or more providers (e.g. a merchant providing goods and / or services, a service provider, etc), one or more customers (e.g. end users or professional buyers, intermediary companies, etc), one or more third parties (e.g. a delivery company for delivering products ordered by a customer / buyer, logistics, payment service providers, financial service providers, other service providers, etc).

The parties may implement through the SPE platform the payment transactions in a collaborative, verifiable (the use of the SPE platform may be transparent to the customer if desired), non-reversible (once committed to a payment transaction the service has to be delivered atomically), dynamic (different constellations of parties for the same service may be involved), fair (all businesses are the same, contracts are ad-hoc, picked based on offering and match of preferences of the contracting party thus liquefying markets), open (any service provider can join and offer their services / participate in a business constellation if the participant accepts the terms of the platform) and / or secure (cryptographically secured, especially the linkage with other platforms, systems and infrastructures, and potentially leveraged) fashion.

The parties may agree beforehand on a business logic underlying the business transaction. The business logic may for example specify a set of requirements that has to be met before a payment is settled and / or conditions in which a payment have to be cancelled. The requirements may be given at initialization of the business transaction. The set of requirements may be used to define the conditions in which a trigger (e.g. payment trigger) has to be generated for triggering one or more operations of a payment flow.

The SPE platform may implement the financial part of a business transaction, and provide a payment service, wherein one or more operations of a payment flow are triggered under control of the SPE platform in dependence upon one or more predefined conditions and/or upon occurrence of one or more predefined events.

This SPE platform is operated and / or accessed by one or more computing devices or systems (CS1, CS2, CS3, CS4) representing respectively the parties to the transaction, including e.g. one or more financial institutions. The SPE platform thus provides hardware and / or interfaces for allowing a computing system (CS1, CS2, CS3, CS4) of a party to interact with the SPE platform, e.g. with one or more control software component (SPC1, SPC2). Identities of parties of a transaction are managed and controlled by the SPE platform and authentication of each party may be performed by the SPE platform in various ways. An ACS: Access Control Server (ACS) may for example be implemented to perform identification and authentication of one or more parties. For example, cardholder (e.g. customers) may be authenticated by the corresponding cardholder's bank. A 3DSecure process (See https://en.wikipedia.org/wiki/3-D_Secure) may for example be implemented by any acquirer within a payment infrastructure.

Each computing system (CS1, CS2, CS3, CS4) may be implemented as a single hardware device or may be implemented on separate interconnected hardware devices connected one to each other by a communication link, with wired and/or wireless segments. Each computing system (CS1, CS2, CS3, CS4) may be implemented as a centralized or non-centralized (e.g. distributed) system, for example by a cloud computing system or using the blockchain technology. Each computing system (CS1, CS2, CS3, CS4) generally operates under the control of an operating system and executes or otherwise relies upon various computer software applications, components, programs, objects, modules, data structures, etc. In one or more embodiments, a computing system (CS1, CS2, CS3, CS4) includes a processor, memory, one or more computer storage media, and other associated hardware such as input/output interfaces.

In one or more embodiments, the SPE platform is interconnected with the one or more payment infrastructures (PAI1, PAI2, PAI3) through the Payment Gateway (PGW). The one or more payment infrastructures (PAI1, PAI2, PAI3) have control over one or more assets involved in one or more financial flows of a payment transaction.

The payment gateway (PGW) may be implemented as a single hardware device or may be implemented on separate interconnected hardware devices connected one to each other by a communication link, with wired and/or wireless segments.

The payment gateway (PGW) includes hardware and / or software to interconnect the SPE platform with the one or more payment infrastructures (PAI1, PAI2, PAI3). The SPE platform may for example integrate with existing card facilities or other payment facilities provided by one or more parties. One or more instances of the payment gateway (PGW) may be used for interconnections with a plurality of payment infrastructures (PAI1, PAI2, PAI3).

Each of the payment infrastructures (PAI1, PAI2, PAI3) is configured to implement one or more payment transactions according to one or more payment methods (e.g. card based, credit based, account based for example according to the PSD2/XS2A specifications, etc). A payment infrastructure (PAI1, PAI2, PAI3) may be configured to provide one or more software interfaces to the payment gateway (PGW). The software interfaces are configured to enable the payment gateway (PGW) to implement one or more payment control functions for controlling one or more assets involved in one or more financial flows of a payment transaction.

A payment infrastructure may for example include several software components such as ACQ-FO (Acquiring Front Office) that provides authorization, clearing and/or settlement functions (e-commerce, POS, etc), or ACQ-BO (Acquiring-Back-Office) that provides platform for clearing and settlement of an authorized (card) payment. ACQ-FO and ACQ-BO separately or together implement functions for an acquiring party or PSP. The ACQ-BO and ACQ-FO functions may be executed by a single component. A payment infrastructure (PAI1, PAI2, PAI3) is provided by a company which may be designated as the Acquirer or the Payment Service Provider (PSP).

A payment infrastructure (PAI1, PAI2, PAI3) may implement one or more financial flows including one or more operations on an asset. An asset may be WL coins, euros or other units of account, a digital or digitized asset, etc.

In one or more embodiment, the SPE platform is interconnected through the API gateway (AGW) with one or more remote devices, for example the collecting devices (CD1, CD2, CD3, CD4) and / or the one or more detection systems (EDS1, EDS2).

Each collecting device (CD1, CD2, CD3, CD4) may be implemented as a single hardware device, for example in the form of a desktop personal computer (PC), a laptop, a personal digital assistant (PDA), a smart phone or may be implemented on separate interconnected hardware devices connected one to each other by a communication link, with wired and/or wireless segments.

Each collecting device (CD1, CD2, CD3, CD4) generally operates under the control of an operating system and executes or otherwise relies upon various software applications, components, programs, objects, modules, data structures, etc. In one or more embodiments, a collecting device includes a processor, memory, one or more computer storage media, and other associated hardware such as input/output interfaces.

Each event detection system (EDS1, EDS2) may be implemented as a single hardware device or may be implemented on separate interconnected hardware devices connected one to each other by a communication link, with wired and/or wireless segments. Each event detection system (EDS1, EDS2) may be implemented as a centralized or non-centralized (e.g. distributed) system, for example by a cloud computing system or using the blockchain technology.

Each event detection system (EDS1, EDS2) generally operates under the control of an operating system and executes or otherwise relies upon various software applications, components, programs, objects, modules, data structures, etc. In one or more embodiments, a collecting device includes a processor, memory, one or more computer storage media, and other associated hardware such as input/output interfaces.

The API gateway (AGW) may be implemented as a single hardware device or may be implemented on separate interconnected hardware devices connected one to each other by a communication link, with wired and/or wireless segments.

The API gateway (AGW) includes hardware and / or software to interconnect the SPE platform with the remote devices such as the collecting devices (CD1, CD2, CD3, CD4) and / or one or more event detection system EDS1, EDS2.

The SPE platform implements one or more control software components (SPC1, SPC2), each of the one or more control software components (SPC1, SPC2) is configured to implement a business logic of a business transaction including a payment transaction.

Each of the one or more control software components (SPC1, SPC2) is configured to interact through one or more software interfaces with one or more remote software components or one or more remote software applications, i.e. software components implemented outside the SPE platform in one or more remote devices (e.g. collecting devices (CD1, CD2, CD3, CD4) and / or detection systems (EDS1, EDS2) and / or payment infrastructures (PAI1, PAI2, PAI3)). For example, a control software component (SPC1, SPC2) may be configured to interact, through the payment gateway (PGW), with one or more software components of one or more payment infrastructures (PAI1, PAI2, PAI3). For example, a control software components (SPC1, SPC2) may be configured to interact, through the API gateway (AGW), with one or more software applications or software components of remote devices (e.g. collecting devices (CD1, CD2, CD3, CD4) and / or detection systems (EDS1, EDS2)).

A control software component (SPC1, SPC2) is configured to control the execution of a payment transaction. The control may be implement in view of controlling the assets of financial flows implemented by a payment infrastructure, for example for controlling transfer of an asset in a payment transaction. In one or more embodiments, one or more payment control functions are implemented by the payment gateway (PGW) and corresponding software interfaces (e.g. one or more specific application program interface(s) APIs) are provided to one or more control software components (SPC1, SPC2) to enable the one or more control software components (SPC1, SPC2) to trigger the execution by the payment gateway (PGW) of the one or more payment control functions.

Controlling the execution of a payment transaction may include initializing, triggering, modifying / changing, interrupting (freezing), cancelling, resuming the execution of one or more transaction steps of the payment transaction. For example, if the delivery of goods is delayed for some reason, the amount to be paid may be reduced by a given percentage. For example, changing the execution of a step may consist in reducing / increasing the amount to be paid in dependence upon one or more predefined conditions. The one or more transaction steps may include: the initiation of the payment transaction, the settlement of the payment transaction, the creation of an escrow, the transfer of asset to one or more beneficiaries (e.g. division of an asset), the authentication of the customer, or any transaction sub-steps. For that purpose, a payment transaction may be identified by a token / identifier of the payment transaction shared between the payment infrastructure (PAI1, PAI2, PAI3) and the payment gateway (PGW), and optionally also with the concerned control software components (SPC1, SPC2). The token may be generated by the payment infrastructure (PAI1, PAI2, PAI3), the payment infrastructure (PAI1, PAI2, PAI3), the payment gateway (PGW) or the concerned control software components (SPC1, SPC2).

An instance of a control software component (SPC1, SPC2) may be associated without one or more conditional payment transactions / business transactions controlled through this instance of the control software component. An instance of a control software component (SPC1, SPC2) may be created for each payment transaction to be controlled. A control software component (SPC1, SPC2) may include other kind of software configured to implement the functions described herein for the one or more control software components (SPC1, SPC2).

In one or more embodiments, the SPE platform may be implemented as a single hardware device or may be implemented on separate interconnected hardware devices connected one to each other by a communication link, with wired and/or wireless segments. The SPE platform may be implemented as a centralized or non-centralized (e.g. distributed) system, for example by a cloud computing system or using the blockchain technology.

In one or more embodiments, the SPE platform is implemented as a blockchain network including several nodes of a peer-to-peer network, wherein each node or a subset of nodes of the peer-to-peer network implements one or more control software components (SPC1, SPC2) associated with one or more parties to a business transaction / a conditional payment transaction. In one or more embodiments, when the SPE platform is implemented as a blockchain network, a control software component (SPC1, SPC2) may include software program, such as a Smart Contract (for example a chaincode of the Hyperledger Fabric software). A Smart Contract typically handles business logic agreed to by members of the network.

Each control software component implements a so-called "Smart Contract" between parties, the "Smart Contract" corresponding to a business transaction including a conditional payment transaction. The parties may agree on the predefined step(s) at which the conditional payment transaction will be interrupted and the one or more predefined trigger conditions upon occurrence of which the conditional payment transaction will be resumed. Such "Smart Contract" is also referred to therein as a "smart payment contract".

A Smart Contract may be defined as a computerized transaction protocol that executes the terms of a contract or business transaction. The general objectives are to satisfy common contractual conditions (such as payment terms, liens, confidentiality, and even enforcement), minimize exceptions both malicious and accidental, and minimize the need for trusted intermediaries. Smart Contracts reduce costs of verification and enforcement. Smart Contracts may prevent moral hazard problems, such as, strategic default. Smart Contracts can reduce agency costs by demanding collateral before entering into a Smart Contract, which represents a commitment to not show opportunistic behavior. A Smart Contract is further defined on the web site https://en.wikipedia.org/wiki/Smart_contract as a computer implemented protocol intended to facilitate, verify, or enforce the negotiation, execution or performance of a contract. Note that a Smart Contract may be implemented without using blockchain technology.

A chaincode is an implementation of Smart Contracts of a specific open source software, namely Hyperledger Fabric. A chaincode is a software program that may be written in various languages: Go, node.js, Java, etc. The chaincode is configured to implement a prescribed interface. The chaincode initializes and manages state information stored in the main ledger (LDG1) (i.e. ledger state of the blockchain database) updated by business transactions implemented by the Smart Contracts run on the SPE platform.

With the blockchain technology, the parties may be represented by computing systems (CS1, CS2, CS3, CS4) forming nodes (peers) within the blockchain network. The computing systems (CS1, CS2, CS3, CS4) may alternatively be interfaced with the SPE platform via the API gateway (AGW). A peer of the blockchain network may for example be run by a financial institution which integrates a node of the blockchain network within its core banking system / infrastructure (e.g. via a PGW node). A Smart Contract may be controlled by one or more peers of the blockchain network through a common software interface.

In one or more embodiments, a payment infrastructure (PAI1, PAI2, PAI3) is configured to provide one or more software interfaces (e.g. API, Application Program Interface) to enable the payment gateway (PGW) to have control over one or more transaction steps of one or more payment transactions.

For example, a payment infrastructure (PAI1, PAI2, PAI3) provides one or more software interfaces to enable a control software component (SPC1, SPC2) to control (e.g. trigger) through the payment gateway (PGW), the execution of transaction steps of a payment transaction upon determination that the one or more predefined trigger conditions are met. For example, the payment infrastructure (PAI1, PAI2, PAI3) is configured to interrupt the execution of a payment transaction until a trigger is received through a software interface. Further, the payment infrastructure (PAI1, PAI2, PAI3) is configured to receive a trigger through the software interface.

The payment gateway (PGW) implements payment control functions for controlling the execution of one or more transaction steps of a payment transaction through a software interface provided by a payment infrastructure (PAI1, PAI2, PAI3). A payment control function is configured to use one or more software interfaces provided by a payment infrastructure (PAI1, PAI2, PAI3). The payment control functions are implemented by the payment gateway (PGW) independently of a business logic and may be triggered from the SPE platform by a control software component (SPC1, SPC2) in order to implement a control over the payment transaction through the payment gateway (PGW) .

The payment control functions may be triggered by a control software component (SPC1, SPC2) upon fulfilment of predefined trigger conditions that are defined and verified by a control software component (SPC1, SPC2) according to a business logic. A payment gateway (PGW) may for example include one or more payment control functions configured to:
- request the execution of a payment transaction to be interrupted at a predefined step, in order for example to freeze an asset, such that the asset is forced to stay within the control of the SPE platform; the payment gateway (PGW) may for example leave acquired funds where they are (on the float or settlement account);
- transfer and/or divide an asset: to one or multiple beneficiaries based on information provided by the control software component (SPC1, SPC2);
- acquire information / input data from the SPE platform and / or from another system / device outside the SPE platform;
- receive authorization to acquire or request funds for a party to the payment transaction;
- change an amount to be transferred;
- resume the execution of a payment transaction or trigger the execution of one or more operations (e.g. one or more transaction steps) of a payment transaction, the operation may be the transfer of a previously frozen asset or of acquired funds.

The execution of a payment control function is requested by a control software component (SPC1) through appropriate software interfaces, for example by a function call, request, message, notification, etc or any technical means for triggering the execution by the payment gateway (PGW) of one or more payment control function. The request for the execution of a payment control function may include one or more parameters (amounts, identification of parties, authorization parameters, etc).

Each of the payment control function may be triggered in dependence upon one or more trigger conditions verified on the basis of the business logic by a correspondong control software component (SPC1, SPC2).

A control software component (SPC1, SPC2) interacts with the payment gateway (PGW) and requests the execution of one or more payment control functions of the payment gateway (PGW) in order to implement the business logic. A control software component (SPC1, SPC2) may create and manage one or more parameters for defining the assets involved in a payment transaction: an amount, an identification of a currency, a list of beneficiaries with respective amount (sum of all amounts is the total amount committed), an identification or description of a payment trigger. A control software component (SPC1, SPC2) implements a business logic on the basis of these parameters and optionally other use case parameters that are specific to a use case. As the transaction steps of a business transaction are executed, the value of the one or more parameters are updated to reflect the changes of execution status of the business transaction. In addition, the execution status changes of the business transaction may be recorded by the main ledger (LDG1) and / or an external ledger (LDG2). The parameters may also concern data pertaining to delivery process, warranty, smart/connected objects (fridge, washing machine, ...), supply chain, delivery contracts, product life cycle, maintenance, insurance, etc.

A control software component (SPC1, SPC2) may be implemented as a software object by means of any object oriented technology or as a set of parameters with associated functions. The functions of a control software component (SPC1, SPC2) may include a function for creating or initializing the payment transaction (e.g. creating an instance of the software object representing the payment transaction), reserving an amount, triggering the payment or any other operation of a payment transaction, confirming the payment, etc). Further, when goods are ordered online by a customer, the functions may include function for confirming the delivery of the goods, providing information to the customer about the delivery status, etc. The parameters of the control software component are updated in dependence upon the execution of each function. The parameters of the control software component are updated in dependence upon the execution of each function.

Parties to the payment transaction may trigger functions of the control software component (SPC1, SPC2) (e.g. of the Smart Contract) (if they have the corresponding rights and / or are authenticated), and modify the state / parameters / flow of a payment transaction. For example: the late occurrence of the predefined trigger condition may reduce the amount to be received by a recipient party or cancel the execution of the payment and the control software component (SPC1, SPC2) may receive a request for amount reduction from the concerned party.

The business logic implemented by the control software component (SPC1) may require interaction between several parties before delivering information and triggering the payment (before a commitment). For example a credit is requested for a certain amount, several financial institutions can make an offer to the tender, the requestor picks the best offer or the contract picks the best least costly credit after a given time has passed, which may be followed by an authorization of the cardholder of recurrent payments for the repayment of the requested and approved credit.

In a blockchain implementation, one or more parties not participating to the blockchain network as a peer, which were granted access can interact/provide information (temperature, position of an object, any other kind of event) to a "Smart Payment Contract" (i.e. to a corresponding control software component (SPC1)) and therefore might influence the state of the corresponding control software component (SPC1). One or more parties not participating to the blockchain network as a peer may also trigger the payment trigger if this was specified in the Smart Contract. For example, therefore an access to an API of the corresponding control software component (SPC1) is provided to this party with a secure authentication process that allows for identification and authentication of the party. For example, a software application of an authorized actor sends a request via an API. An API server (e.g. the API gateway AGW) receives the request and connects to a peer of the blockchain network to interface with the concerned Smart Contract. Then the Smart Contract may make changes in the state of the ledger.

The remote devices (e.g. detection systems (EDS1, EDS2) and collecting devices (CD1, CD2, CD3, CD4)) are each configured to provide to the one or more control software components (SPC1, SPC2) input information (e.g. event information and / or delivery information) regarding occurred events so that the financial flows may be controlled in dependence upon to the occurrence of one or more events according to the business logic. The API gateway (AGW) provides one or more APIs configured to receive input information (e.g. event information and / or delivery information) from collecting devices (CD1, CD2, CD3, CD4).

A collecting device (CD1, CD2, CD3, CD4) may be any electronic device that is configured to access to the interfaces (API) or the API gateway (AGW), for example IoT devices (Internet of the Things), smartphones, or any device/software that is configured to execute functions through an API. A collecting device (CD1, CD2, CD3, CD4) may be configured to send to a control software component (SPC1, SPC2) via the API gateway (AGW) (e.g. by messages and / or to API function call) event information and / or delivery information.

Event information may be information regarding one or more physical parameters (temperature, location of the collecting device, date and time, etc) measured by the collecting device whenever an event (physical parameter change, predefined value, reaching a threshold, etc) occurs for these physical parameters.

Delivery information may be information regarding events (received goods, messages, delivery state change, etc) related to the delivery of goods. The delivery information may result from automatic detection / messages and / or one or more inputs of a user through one or more user interface(s). Delivery information may be included in a notification / message sent from one of the remote devices to the concerned control software component (SPC1, SPC2) via the API gateway.

A control software component (SPC1, SPC2) is configured to determine whether one or more trigger conditions are fulfilled. The one or more conditions may be determined in dependence upon the occurrence of one or more events. The one or more conditions may be fulfilled within the perimeter of the SPE platform (internal perimeter) or outside the perimeter of the platform (external perimeter).

The internal perimeter includes any condition that can be fulfilled on the SPE platform, through for example one or more events whose occurrence is detected by an interface, a timer, etc... The external perimeter includes any condition that can be fulfilled within a payment infrastructure, a remote software application or within the business flow of an external system. Here, an external system may include a distributed ledger, where a trigger in the external system leads to an action on the SPE platform with respect to a payment transaction. Hence, payment functionality may be added to the external system or blockchain.

The conditions for triggering a resume of a payment transaction may be verified in different manners. In one or more embodiments, the control software component (SPC1, SPC2) is configured to receive, through the API gateway (AGW), from the one or more remote devices (e.g. collecting devices (CD1, CD2, CD3, CD4), CD3) and / or the and / or event detection system (EDS1, EDS2)), input information (e.g. event information and / or delivery information) regarding an occurrence of one or more events, for example events during the delivery of goods, in order to determine on the basis of the input information that one or more predefined conditions for triggering the settlement of the payment transaction are met.

A trigger may be implemented as a function call through an API of a software component which activates a function of this software component (e.g. of a software object). The trigger may also be activated through a function of another software component. A trigger may also be implemented by a request, message, notification, etc or any technical means for triggering the execution of the target function. When the SPE platform is implemented using the blockchain technology, the trigger may be defined (on LDG1) as an action on another blockchain (LDG2)(e.g. by linkage of blockchains).

In one or more embodiments, the one or more control software components (SPC1, SPC2) are configured to implement one or more financial functions, distinct from the functions implemented by the payment infrastructures (PAI1, PAI2, PAI3). For example, the one or more control software components (SPC1, SPC2) may be configured to implement a wallet in which a digital, digitized and tokenized value can be stored (e.g. units of account), transferred to another wallet or extracted from the SPE platform for transmission to an external or remote system, via for example to a software component of a payment infrastructure (PAI1, PAI2, PAI3).

The one or more control software components (SPC1, SPC2) may be used for controlling and managing on-chain or off-chain payments, connecting to a distributed ledger on a need basis. On-chain refers to as persistent wallets and off-chain refers to as transaction wallets. For on/off-chain payments, units of account managed by one or more control software components (SPC1, SPC2) represent either a debt or an amount of currency under the control of a Payment Gateway (PGW), such as currency that has been collected through an acquiring flow (account or non-account based) of a payment transaction. Off-chain units of account exist between smart payment creation and the financial settlement has been processed (e.g. completion of the contract). On-chain units of account can remain on the blockchain in wallets and be transferred to other wallets within the eco-system. At the moment the owner of on-chain units wants to be paid out the currency it represents (ie: euros), a transfer from the float/settlement account to the payee is initiated OR the debt is requested to be collected and paid out to the payee.

The main ledger (LDG1) may be implemented as a local or distributed ledger. The main ledger (LDG1) is configured to record status / history of operations performed by / under the control of the SPE platform. The ledger includes a tamper-proof history of the operations performed by / under the control of the SPE platform. The recorded operations may include operations on a payment transaction and / or on an asset (e.g. creation, changes, transfer, destruction or change of ownership to an asset) performed under control of the one or more control software components (SPC1, SPC2).

When the SPE platform is implemented as a blockchain network, the main ledger LDG1 may be distributed over the nodes of the blockchain network and be accessed by one or more nodes (peers) of the blockchain network.

Implementing a business logic may include an interaction - directly or indirectly, e.g. via a gateway or any combination of hardware / software interfaces - with another blockchain network, a remote database or APIs of remote systems.

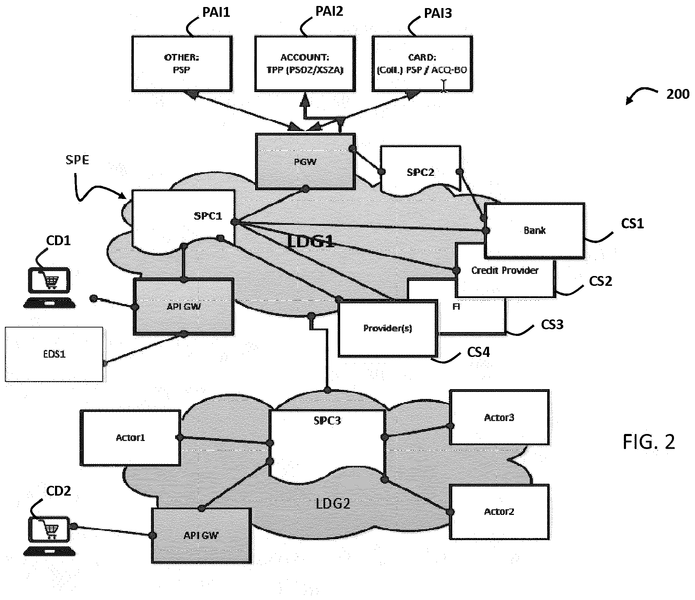

FIG. 2 shows an example system 200 for implementing a conditional payment transaction. Like system 100 described by reference to FIG. 1, the system 200 may include: a payment platform (SPE) also referred to therein as the Smart Payment Engine, a Payment Gateway (PGW), a API gateway (AGW), a main ledger (LDG1), one or more payment infrastructures (PAI1, PAI2, PAI3), one or more collecting devices (CD1, CD2, CD3, CD4), one or more detection systems (EDS1, EDS2). The description made by reference to FIG. 1 is also applicable to the system of FIG. 2 for all common entities.

The system (200) may include an external ledger (LDG2) connected with the main ledger through a ledger-to-ledger interface. The ledger LDG2 is configured to be used for recording a history of operations (status, parameters values, etc) of a business transaction (e.g. use case transaction) implemented in- or outside the SPE platform, in connection with a payment transaction implemented by the SPE platform. The parameters may concern data pertaining to warranty, smart/connected objects (fridge, washing machine, ...), supply chain, , product life cycle, maintenance, insurance, etc. These transactions may correspond to a specific use case in which payment functionality is added through an interface with the SPE platform. Typically, the business logic pertaining to a use case may be stored/handled by the external ledger (LDG2).

The external ledger (LDG2) may be used to implement aspects of the business logic that are not implemented by the SPE platform. For example, the SPE platform may be dedicated to the implementation of the control functions over one or more financial flows in connection with the payment infrastructures, while the external ledger (LDG2) may be used to implement control functions over one or more business flows on top of the one or more financial flows. The external ledger (LDG2) may be a ledger specific to one or more use cases. The external ledger (LDG2) may be configured to implement detection of occurrence of one or more events occurring outside the SPE platform and / or provide information regarding conditions fulfilled in the context of a use case transaction whose history is recorded by the external ledger (LDG2).

In one or more embodiments, the main ledger (LDG1) and the external ledger (LDG2) may interact and communicate according to a set of technical and business requirements, hence adding payment functionality to the external ledger (LDG2). This could be achieved using an interledger protocol. In one or more embodiments, a ledger gateway is implemented the main ledger (LDG1) and the external ledger (LDG2): the ledger gateway interconnects the SPE with another blockchain.

Example embodiments of a method for implementing a conditional payment transaction will now be described.

A conditional payment transaction may have one or more inputs of assets (e.g. funds) and have one or several outputs of assets (e.g. funds) to be transferred to a recipient party. A conditional payment transaction may include the following steps:
1) initialization of the transaction (a party (payer, payee or third party providing credit or guarantee of payment) has to commit funds
2) a token is created for identification of the conditional payment transaction (according to a given standard / protocol) and shared between the SPE platform and a payment infrastructure;
3) the execution of the conditional payment transaction is frozen (i.e. interrupted) at some predefined step (e.g. before settlement, before the funds are transferred or requested to be transferred) until a predefined condition is fulfilled;
4) the business logic of a business transaction corresponding to use case is implemented;
5) a determination is made that the predefined condition is fulfilled during the implementation of the use case; this may include detection of occurrence of events during a delivery phase and / or one or more events occurring within the SPE platform and / or in remote devices interconnected with the SPE platform and / or within an external ledger (LDG2) interconnected with the main ledger (LDG1) of the SPE platform;
6) upon determination that the predefined condition is fulfilled, a trigger (e.g. step trigger for triggering a step of a payment transaction) is sent by the payment gateway (PGW) to the payment infrastructure on request of a control software component (SPC1, SPC2);
7) the conditional payment transaction is resumed: depending on the received trigger, one or more operations may be performed. For example, funds are transferred (and collected if necessary) to one or more recipient parties
8) the implementation of the business transaction may continue and transaction steps 5 to 7 be repeated as necessary.

The determination that the predefined condition is fulfilled may be performed by the control software component (SPC1, SPC2). The determination that the predefined condition is fulfilled may include detecting the occurrence of one or more predefined events and / or receiving information regarding the occurrence of one or more predefined events and determining that the predefined condition is fulfilled on the basis the business logic. If the predefined condition is fulfilled, then the control software component (SPC1, SPC2) may trigger the execution of a payment control function by the payment gateway (PGW). The trigger is sent to the payment infrastructure by the payment gateway (PGW), .e.g. by a payment control function. The predefined condition is also referred to herein as the trigger condition.

The payment trigger may be used for controlling the payment based on various payment schedules:
- Pay before: wallets are pre-funded before a smart payment contract is committed to by the owner of the wallet;
- Pay now: money is acquired or pre-authorized at the moment of order or
- Pay after: money is requested at a later date, a party assumes the risk of non-payment (bank, merchant, creditor, ...)

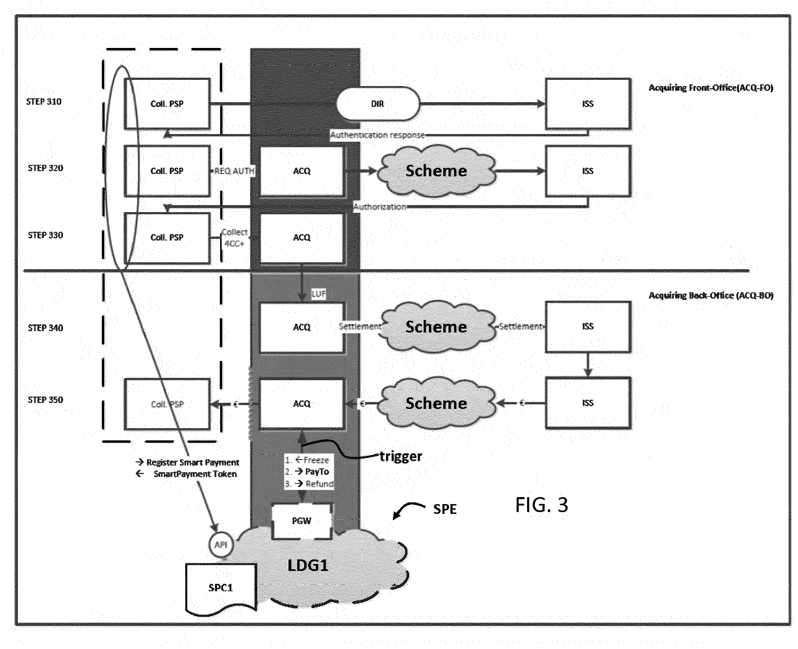

FIG. 3 illustrates an example of a general flow that is applicable to any card based payment transactions. In this example, the SPE platform is implemented as a blockchain network and the control software component (SPC1) implements a Smart Contract by means of chaincode within the blockchain network. Parties are represented by nodes (peers) within the within the blockchain network. This example may however be implemented without using the blockchain technology, for example according to one or more embodiments described herein.

In this example flow, the payment Gateway (PGW) is a gateway that implement payment control function configured to interact with payment infrastructure for card based payment. The payment gateway (PGW) implements payment control functions over card facilities (with PSP, payment service provider, or Acquirer systems or services), Account services using PSD2/XS2A in the role of third party provider (TPP) or other type of PSP services which includes controlling funds or assets directly or indirectly via a provided software interface.

The API Gateway allows remote system to interface with the blockchain or the Smart Contract (to influence the state, trigger a function, or anything that can be defined in a Smart Contract).

Parties may interact with the Smart Contract if the Smart Contract allows for this. Multiple actors of the same group (competitors or not) can take part. An example: actors like service providers may compete in a tender to offer their services to a requestor, to provide a credit to a credit requester. These actors can have direct access to the blockchain if they choose, and are allowed to be peers or can interface (using an identity extended by the SPE) via the API Gateway (AGW), for example through computing systems (CS1, CS2, CS3, CS4).

The payment transaction includes transaction steps 310 to 350. A flag may be set to a predefined value to trigger the conditional payment mode of the payment transaction. This flag may be set when the payment transaction initializes in order to specify that the payment transaction is a conditional payment transaction, i.e. that at least one trigger is required for full completion of the payment transaction. This flag may be implemented either by the so-called "Collecting PSP" software component (hereafter, PSP) or/and the "Acquirer" software component (hereafter, ACQ).

According to an example embodiment of a card based payment transaction, the "Acquirer" software component implements front office (FO) acquirer functions implemented by a ACQ-FO component and back-office functions implemented by a ACQ-BO component. The ACQ-FO and / or the ACQ-BO components may be connected to their own blockchain node that interacts to implement operation on behalf of the Acquirer. The ACQ-BO component sends the money which is collected on behalf of the merchant to the merchant's account. The ACQ-BO component is configured to validate all payments which are designated as smart payments against their respective status in the blockchain. If the status of a payment is set to release then the payment is included in the next payout to the merchant, otherwise the payment is withheld on a float/settlement account. For the ACQ-FO component, if the flag is set to the predefined value that triggers the conditional payment mode, then a smart payment flow is executed instead of the normal payment flow. The smart payment flow, after customer authentication, authorization and balance checks, may invoke the creation of a new smart payment in the SPE platform blockchain.

At steps 310 and 320, authentication (step 310) and authorization (step 320) are performed as-is.

During step 330 (collecting phase), the PSP or ACQ component requests (e.g. by API function call) the Smart Contract, that is the corresponding control software component (SPC1) in the SPE platform, to register the payment transaction as a conditional payment transaction and may get in return a token that identifies the payment transaction. This token may be used by the payment gateway (PGW) (or optionally the software component (SPC1)) to get information on the payment transaction from the PSP or ACQ component. Alternatively the token may be provided earlier, for example during step 310 or 320.

At step 340, the clearing phase takes place as-is.

At step 350, the settlement phase takes place as-is, with exception to the PSP or ACQ component: when the flag identifying a conditional payment is set, all payments with are retained from the pay-out to the PSP until a fund release is triggered. The control software component (SPC1) may receive from the PSP and ACQ component information that the state of the payment transaction is frozen.

During step 350, when the control software component (SPC1) determines that the predefined condition for triggering the payment is fulfilled, the control software component (SPC1) requests the execution of a payment control function of the payment gateway (PGW) which triggers the settlement of the transaction by sending a trigger to the ACQ component. Alternatively, a refund pay may be decided to abort the fund transfer: in such situation the control software component (SPC1) triggers requests the execution of another payment control function of the payment gateway (PGW) which triggers the refund.

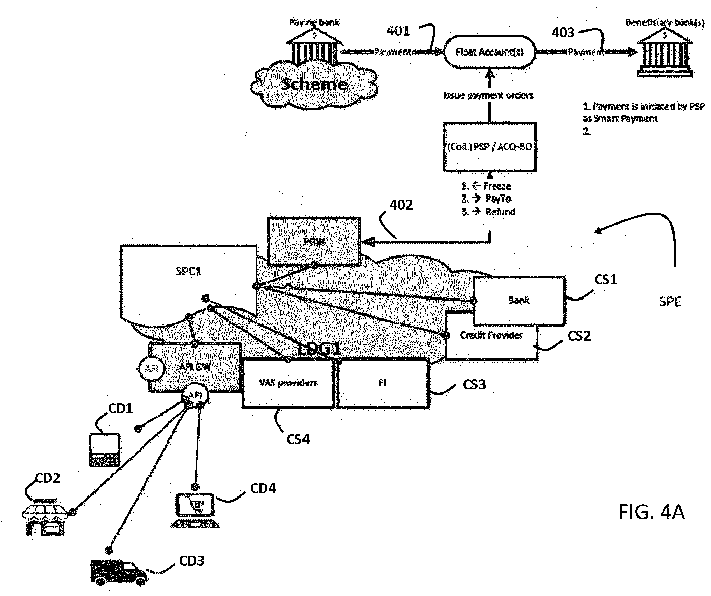

In one or more embodiments, for any card based flows, an escrow may be implemented. FIG. 4A illustrate a payment flow (Card acquiring/payment flow) according one or more embodiments. The flow may be amended as follows.

In step 401, the payment is processed and funds are received on a float/settlement account (e.g. escrow) associated with the PSP or ACQ component connected to the payment gateway (PGW). Upon receipt of the funds, control is given to the payment gateway (PGW) over the received funds.

In step 402, upon receipt of the payment trigger, the payment gateway (PGW) sends a payment order with a list of one or more beneficiaries and corresponding amounts to the PSP or ACQ component to transfer the funds to the beneficiaries.

In step 403, the PSP or ACQ component executes the received payment order and triggers the requested transfer of funds.

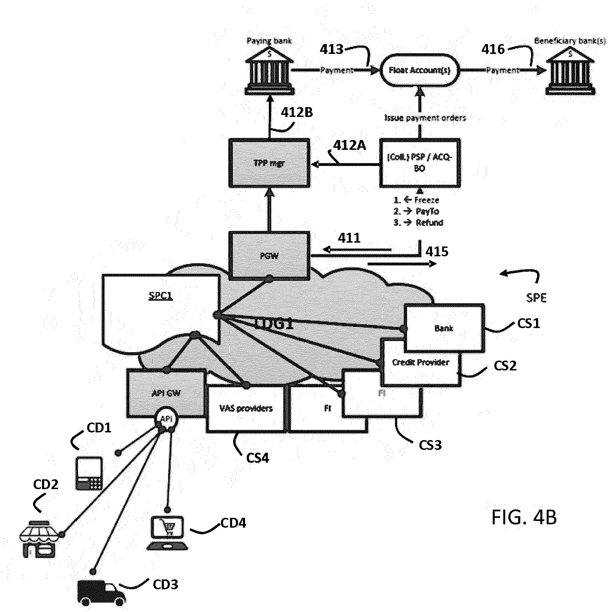

FIG. 4B illustrate aspects of a payment flow (PSD2/XS2A payment flow) including transaction steps 411 to 413, that is applicable to any account based payment transactions. FIG. 4B shows an account based flow via an PSP / ACQ and the payment flow with a TPP module.

In step 411, a payment is initiated by a Collecting PSP / ACQ component. In step 412A, authorization is requested to the TPP for the fund transfer, the payer is asked (by the TPP) to perform Strong Customer Authentication (SCA), if positive authorization is provided to the TPP. In step 412B, funds are requested with PIS request. In step 413, the payer bank pays to float/settlement account, upon receipt; the funds are blocked by the payment gateway (PGW). In step 414, the the control software component (SPC1) implementing the Smart Contract is in execution phase. In step 415, upon receipt of a payment trigger, a payment request is sent by the payment gateway (PGW) to the Collecting PSP / ACQ component. In step 416, the float/settlement account makes the payment to the beneficiary bank(s).

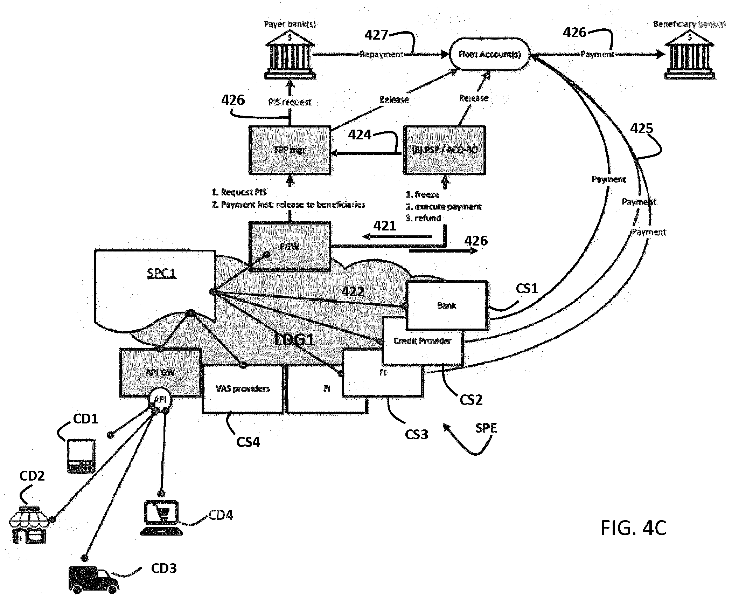

FIG. 4C illustrate aspects of a payment flow (Credit by FI - repayment via XS2A recurrent payments), including transaction steps 421 to 427, in which a credit is requested from a financial institution and re-paid using account payments (PSD2/XS2A). In step 421, a credit is requested by the requestor (Smart Contract instantiation). In step 422, several financial institutions receive credit request and instantly provide a quote (to the SPC). In step 423, a requestor selects the best offer. In step 424, the requestor authorizes the repayment plan by means of SCA (every x time y € is requested from its account) or payment at delivery. In step 425, the selected financial institution provides credit to the float account at **T₀** (Moment of order). In step 426, the Smart Contract triggers payment (T₁: Moment of payment trigger event), the payment gateway (PGW) sends payment instructions to the asset controller (PAI1), money is transferred from float/settlement account to beneficiaries. In step 427, repayment by the credit requestor to creditor is implemented (either via the float/settlement account of the PSP/ACQ or directly to the account of the creditor).

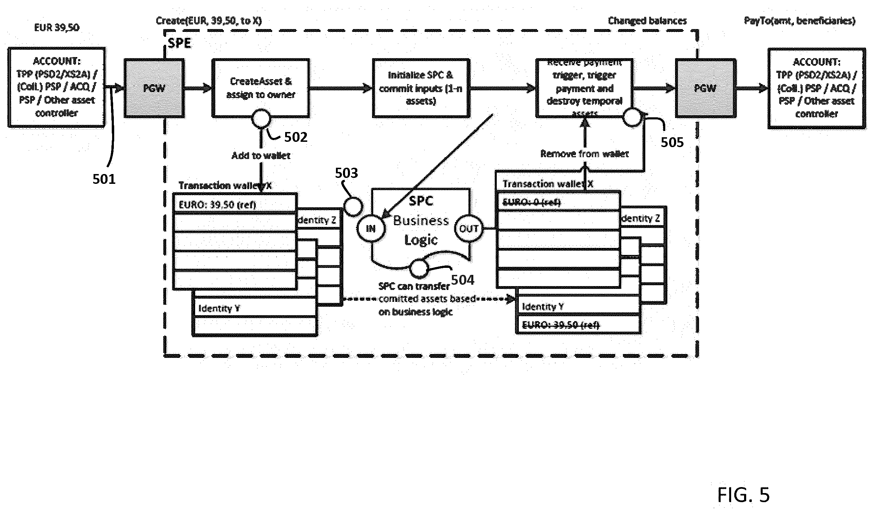

FIG. 5 illustrates aspects of a payment flow implying transaction wallet payments, with assets creation, transfer and destruction.

In step 501, funds are received from the asset controlling components (in this example, the amount is EUR 39,50). Step 502 includes the creation and assignment of assets in the transaction wallets of the respective owner(s) (e.g. create EUR 39,50 in wallet X). Step 503 includes the commitment of the created assets as input of a contract (commit EUR 39,50). In step 504, upon commitment of the assets, a control software component (SPC1) implementing a smart payment contract is given full control over the committed assets and may therefore transfer/divide assets as described in the business logic (EUR 39,50 to Y). In step 505, upon completion of the smart payment contract, a settlement process is started which removes the assets from the wallet of the owner(s) and sends them using the asset controlling components to its new respective owners (for example triggering the financial flows).

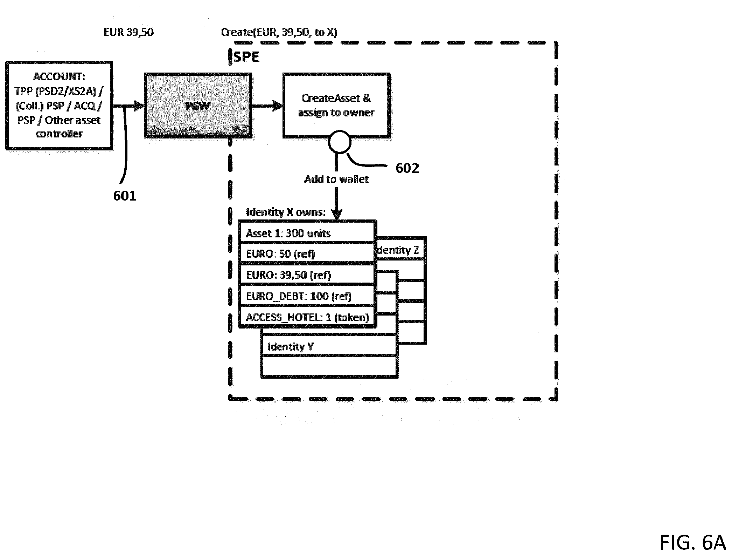

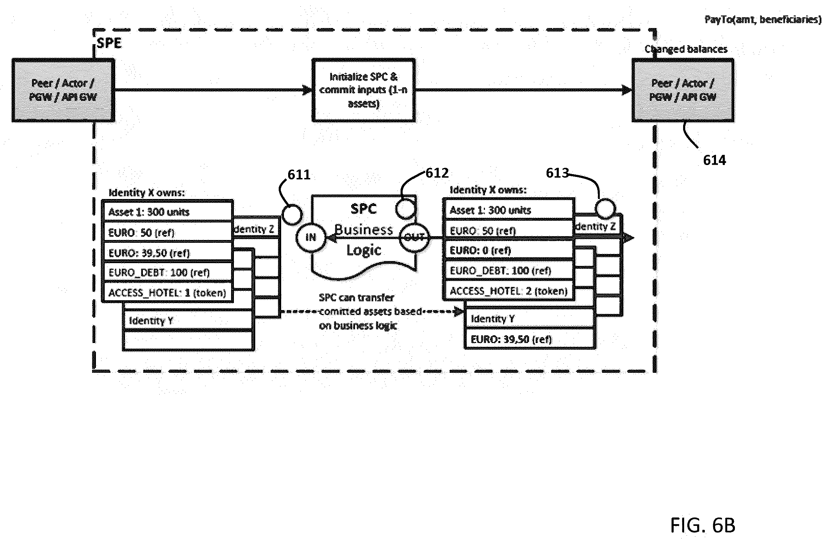

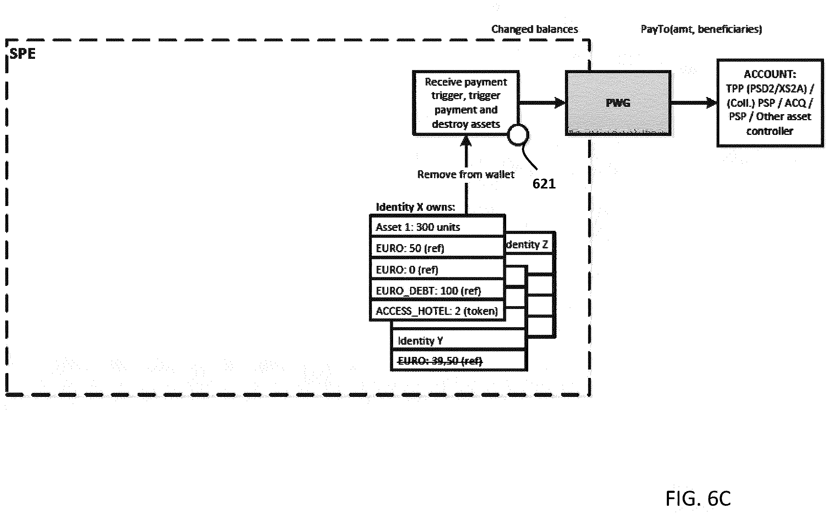

FIG. 6A to 6C illustrate aspects of a payment flow implying persistent wallets. Assets in persistent wallets persist after completion of a smart payment contract. The payment flow includes the following phases: funding (see FIG. 6A), smart payment contract commitment (see FIG. 6B) and payment (see FIG. 6C).

FIG. 6A show the funding phase. Step 601 includes receipt of the funds (EUR 39,50) from the asset controlling components. Step 602 includes creation and assignment of assets in the wallets of the respective owner(s) (create and assign the amount EUR 39,50 to wallet X).

FIG. 6B show the interaction with the SPE platform and smart payment contract commitment. Step 611 includes commitment of assets as input of contract (commit EUR 39,50). In step 612, a control software component implementing a smart payment contract has full control over the committed assets and can transfer/divide assets as described in the business logic (EUR 39,50 to Y). In step 613, upon completion of the smart payment contract, a settlement process between wallets is started. In step 614, the Payment GW keeps track of balance changes.

FIG. 6C show the payment phase and asset extractions. In step 621, upon request by the owner of the wallet, a payment/extraction can be triggered with one of the asset controlling components. The respective asset is destroyed and payment instructions are provided to the asset controlling component(s).

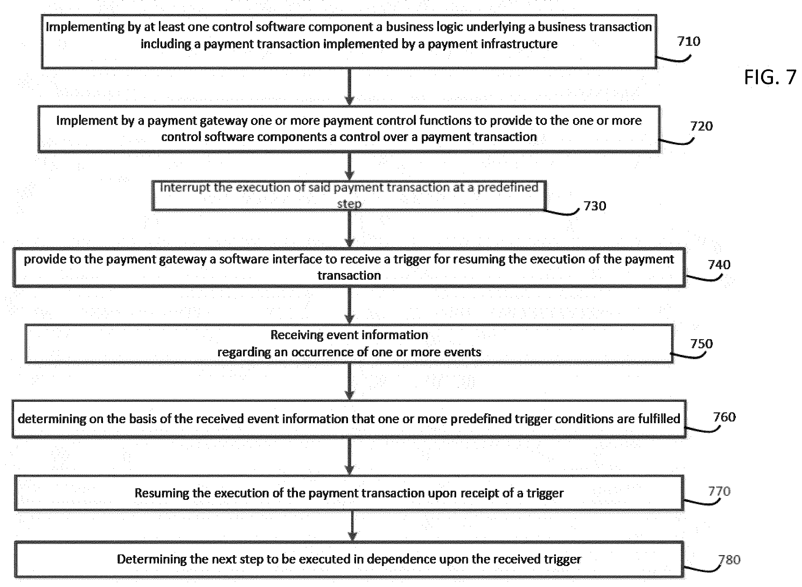

FIG. 7 shows a flow chart of a method for implementing a conditional payment transaction. Steps of the method may be implemented using a system for implementing a conditional payment transaction according to any embodiments. The method steps implemented by a payment infrastructure (PAI1, PAI2) may be implemented by one or more software components of the payment infrastructure (PAI1, PAI2).

While the various steps in the flowchart are presented and described sequentially, the man skilled in the art will appreciate that some or all of the steps may be executed in different orders, may be combined or omitted, and some or all of the steps may be executed in parallel.

In step 710, one or more control software component (SPC1, SPC2) implements a business logic underlying a business transaction. The business transaction includes a payment transaction implemented by a payment infrastructure (PAI1, PAI2). The execution of the payment transaction is started by a payment infrastructure (PAI1, PAI2). A control software component (SPC1, SPC2) (e.g. a Smart Contract) is instantiated by a to the business transaction implemented by the concerned control software components (SPC1, SPC2) (e.g. by a merchant, a payment service provider, a customer via the merchant, an acquirer, etc).

In step 720, a payment gateway implements one or more payment control functions configured to provide to the one or more control software components (SPC1, SPC2) a control over a payment transaction.

In step 730, the payment infrastructure (PAI1, PAI2) is configured to interrupt the execution of said payment transaction at a predefined transaction step (e.g. at a predefined operation of a payment transaction) until a predefined trigger is received. The transaction steps of a payment transaction may be defined with any appropriate granularity in order to be able to interrupt the payment transaction whenever appropriate for complying with the business needs. Upon interruption of the execution of the payment transaction, information and / or request for instructions may be sent by the payment infrastructure (PAI1, PAI2) to the payment gateway (PGW). The information may include information about one or more expected triggers. The request for instructions may be a request for a trigger or a request for trigger parameters that define a trigger.

In one or more embodiment, the payment flow may be adapted to provide guaranty of payment despite the interruption, regardless of the duration of the interruption. For example all or a portion of the amount to be paid, funds or assets may be transferred to an escrow/float/settlement account during the interruption of the payment transaction such that a guaranty of payment is provided for the acquiring and finally the beneficiary(ies) of the payment. For example, a third party makes this payment to the escrow account or guarantees payment by other means (i.e. covered by a contract).

In step 740, the payment infrastructure (PAI1, PAI2) is configured to provide to the payment gateway (PGW) a software interface to receive a predefined trigger and to wait for at least one predefined trigger. More generally, the payment infrastructure (PAI1, PAI2) is configured to provide to the payment gateway (PGW) a software interface to receive instructions regarding the execution of the payment transaction. The instructions may include a trigger and / or trigger parameters that define a trigger. In one or more embodiment, a payment control function is or includes a trigger function configured to generate such a predefined trigger and / or trigger parameters.

In step 750, the one or more the control software components (SPC1, SPC2) receive delivery information notification regarding an occurrence of one or more events during the delivery phase. The delivery information may be received from one or more remote devices (e.g. collecting devices (CD1, CD2) and/ or one or more detection systems (EDS1, EDS2)) and / or a party to the business transaction implemented by the control software components (SPC1, SPC2) (e.g. from a peer / node of the blockchain network / via the API gateway (AGW)).

In step 760, the one or more the control software components (SPC1, SPC2) determines on the basis of the received delivery information that one or more predefined trigger conditions are fulfilled.

In step 770, the one or more the control software components (SPC1, SPC2), trigger, upon determination that the one or more predefined conditions are fulfilled, the execution of the trigger function.

In step 780, the trigger function generates a trigger. The execution of the payment transaction is resumed starting from the transaction step (e.g. operation) at which the payment transaction has been interrupted in method step 730. A payment transaction is resumed and a next transaction step is executed. Funds or assets that have been transferred to an escrow/float/settlement account may be released. Or authorizations (i.e. card, account) may be requested for clearing and/or settlement of the payment. In case no authorization or funds has yet been obtained, a request for payment may be sent to the payer or the party that provided guaranty of payment in case of non-payment by the payer.

In one or more embodiments, several triggers are predefined and may be used for resuming the execution of the payment transaction. The next transaction step to be executed may be determined (e.g. selected among a plurality of possible next transaction steps) in dependence upon the delivery information by the control software components (SPC1, SPC2). The control software components (SPC1, SPC2) triggers the execution of a payment control function of the payment gateway (PGW) configured to generate a trigger (e.g. appropriate instructions and / or trigger parameters) corresponding to the next transaction step (e.g. operation) to be executed.

Thus, upon receipt of a trigger by the payment infrastructure, the next transaction step (e.g. operation) to be executed is determined in dependence upon the received trigger. For example, in a card based payment transaction between a customer and a merchant, the payment transaction may be interrupted by freezing the settlement of the payment. If a first trigger is received, the settlement of the payment is completed and amount is credited on a bank account of a receiving party (e.g. the merchant). If a second trigger is received, the payment is cancelled and the frozen transaction amount is paid back to the customer or not transferred. If a third trigger is received, the amount to be transferred to the merchant is modified, e.g. reduced or increased by a given percentage, and the settlement of the payment is completed using the modified amount, i.e. the reduced amount is credited on a bank account of the merchant.

In one or more embodiments, 730 to 780 may be repeated: once the payment transaction is resumed at step 780, execution of the payment transaction may continue until another interruption is programmed at a next predefined transaction step (e.g. at a predefined operation). The execution of the payment transaction will thus be interrupted at a next predefined transaction step (e.g. operation) until another trigger is received.

An example of complex business transaction including conditional payment transaction may concern a Belgian machine constructor and a French customer. The French company who has no history with the Belgian constructor wishes to order one of its machines for an amount of 30.000€. The Belgian constructor says it can ship the machine in 3 weeks. A logistics company still has to be contracted for the shipping. The customer wishes to pay 20% if the machine is within 20km of the customer's premises, the rest is paid upon inspection by a designated third party, hereafter the Inspector. The machine may need service from a certified servicer when it breaks down.A smart contract may be implemented by the SPE platform for implementing the business transaction, called "SmartMachine". The smart contract comprises different phases: Commitment to contract, Transport, Payment, Service, Re-sale & ownership described hereafter. For all these phases, the smart contract implements the underlying business logic. Alternatively, several smart contracts may be implemented, and a smart contract be implemented for each phase.

Commitment to contract: At purchase the constructor and customer commit to the smart payment contract, meaning the French customer pays with his preferred payment mean (card or account), does strong customer authentication and the contract is committed. The constructor modifies the machine and is ready for shipment (within the three weeks). In the meanwhile a tender for the logistics is opened to which large enterprises and soletraders can apply, the constructor (paying for the transport in this case) selects the best offer and awards the contract.

Transport: The machine is equipped with hardware and software which allow it to connect to the internet. The machine is also equipped with a GPS tracker which is registered with the SmartMachine contract and sends its location every hour to the control software component (SPC1) via the API gateway AGW.

Payment: Every received location updates the contract checks if the coordinates are within the 20km range, if this is the case, a payment trigger is generated by the payment gateway (PGW) in order to pay 20% to the machine constructor. The installation of the machine takes place and the designated third party inspector comes to check the installation. After approval (a message comprising event information concerning the approval is received via the API gateway (AGW)), the rest of the payment is released to the constructor: another payment trigger is generated by the payment gateway (PGW). Further, the ownership of the machine is established at the name of the French company in one of the ledgers.

Service: After a while the machine detects it needs maintenance and it automatically raises a tender for servicing: event information concerning the detection is received by the SmartMachine contract implemented by the SPE platform. Upon receipt of the event information, the SmartMachine contract implements the business logic. For example, the available certified service companies respond to the tender and commit a price, the owner of the machine commits a payment (or the machine already had a budget for maintenance in its own wallet), the selected servicer comes to provide the service. The machine detects it is fixed and completes the payment to the servicing company: a further payment trigger is generated by the payment gateway (PGW) on request from the SmartMachine contract upon receipt of information of the completion of the maintenance.

Re-sale & ownership: The owner of the machine wishes to sell the machine for 20.000€ (estimated remaining value). A bid is started, several interested buyers place their bid and commit payment. Any of the bidders could check if the machine really belongs to the seller or if the machine was stolen as this is registered on the SPE or one of its affiliated ledgers. As well can the bidders see the history of maintenance on the machine and decide its value. One bid is chosen, confirmation is sent to the SPE platform (via "SmartMachine"). The SmartMachine contract requests the generation of a trigger by the payment gateway (PGW) in order to trigger the settlement of payment and thereby to transfer of ownership of the machine to its new owner.

Generally, the present disclosure relates to a system for implementing a conditional payment transaction. The system according to the first aspect may comprise a payment platform (SPE) configured to execute at least one control software component (SPC1, SPC2) that implements a business logic underlying a business transaction, wherein the business transaction includes a payment transaction implemented by a payment infrastructure (PAI1, PAI2) and a payment gateway (PGW) configured to execute at least one payment control functions to provide to the one or more control software components (SPC1, SPC2) a control over a payment transaction.

In one or more embodiments, the payment infrastructure (PAI1, PAI2) is configured to start an execution of a payment transaction and to interrupt (730) the execution of said payment transaction at a predefined transaction step.

In one or more embodiments, the payment infrastructure (PAI1, PAI2) is configured to wait for at least one trigger from the payment gateway (PGW) before resuming the execution of said payment transaction.

In one or more embodiments, the at least one payment control function comprises at least one trigger function configured to generate said at least one trigger.

In one or more embodiments, the at least one control software component (SPC1, SPC2) is configured to receive delivery information notification; determine on the basis of the received delivery information included in the delivery information notification that the one or more predefined trigger conditions are fulfilled; and trigger, upon determination that one or more predefined conditions are fulfilled, the execution of the trigger function in order to resume the execution of the payment transaction.

In one or more embodiments, the payment gateway (PGW) is configured to execute at least one payment control function that generates a trigger to trigger the execution of a next transaction step of the payment transaction.

In one or more embodiments, the at least one control software component (SPC 1, SPC2) is configured to determine, on the basis of the delivery information, the next transaction step to be executed.

In one or more embodiments, the payment gateway (PGW) is configured to execute a trigger function configured to generate a trigger corresponding to the next transaction step to be executed.

In one or more embodiments, the next transaction step to be executed comprises one or more operations among the set of operations consisting of: settlement of a payment, cancelling a payment transaction, changing an amount to be transferred, transfer of an asset, division of an asset, sending notification of acceptance of a credit, send notification of refusal of a credit, sending a request for assets and refund of transferred assets.

In one or more embodiments, the system according to the first aspect includes an API gateway (AGW) configured to interconnect the payment platform (SPE) with one or more remote devices (e.g. collecting devices (CD1, CD2, CD3, CD4) and / or one or more detection systems (EDS1, EDS2)) for receiving delivery information regarding an occurrence of one or more events during the delivery phase.

In one or more embodiments, the at least one control software component (SPC1, SPC2) is configured to receive, through the API gateway (AGW) from at least one remote device, the delivery information.

In one or more embodiments, the payment platform (SPE) comprises a blockchain network comprises a plurality of nodes corresponding to parties to the business transaction and wherein the at least one control software component (SPC1, SPC2) implements a Smart Contract between parties to the business transaction.

The embodiments may be combined of the system for implementing a conditional payment transaction may be combined.

Generally, the present disclosure relates to a method for implementing a conditional payment transaction. The method according to the first aspect may comprises one or more steps among the followings steps:
- executing, by a payment platform (SPE), at least one control software component (SPC1, SPC2) that implements a business logic underlying a business transaction, wherein the business transaction includes a payment transaction implemented by a payment infrastructure (PAI1, PAI2), wherein the payment infrastructure (PAI1, PAI2) is configured to start an execution of the payment transaction, to interrupt the execution of said payment transaction at a predefined transaction step and to wait for at least one trigger from the payment gateway (PGW) before resuming the execution of said payment transaction;
- executing, by a payment gateway (PGW), one or more payment control functions to provide to the one or more control software components (SPC1, SPC2) a control over a payment transaction, wherein the at least one payment control function comprises at least one trigger function configured to generate said at least one trigger;
- receiving, by the control software component (SPC1, SPC2), delivery information notification regarding an occurrence of one or more events during a delivery phase;
- determining on the basis of the delivery information notification that one or more predefined trigger conditions are fulfilled; and
- triggering, upon determination that the one or more predefined conditions are fulfilled, the execution of the trigger function in order to resume the execution of the payment transaction.
- generating, by a payment gateway (PGW), a trigger to trigger the execution of a next transaction step of the payment transaction.
- determining, on the basis of the delivery information notification, the next transaction step to be executed; and
- generating a trigger corresponding to the next transaction step to be executed.

In one or more embodiments, the next transaction step to be executed comprises one or more operations among the set of operations consisting of: settlement of a payment, cancelling a payment transaction, changing an amount to be transferred, transfer of an asset, division of an asset, sending notification of acceptance of a credit, send notification of refusal of a credit, sending a request for assets and refund of transferred assets.

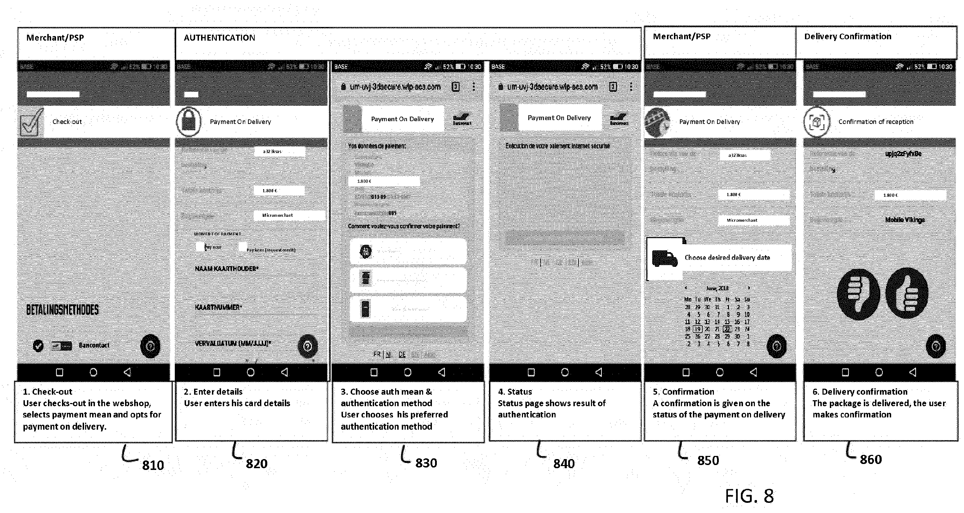

FIG. 8 illustrates aspects of a method for implementing a conditional payment transaction in accordance with an example. FIG. 8 illustrates how a web application interconnected with a payment platform SPE may be used on customer side for ordering goods, triggering the payment transaction, confirming the delivery status of goods and completing the payment transaction. Several example user interfaces 810-860 of a web application are shown.

A first user interface 810 is displayed once the user has selected the goods from the web shop. The user may select a payment method (e.g. card based payment) that implies a payment on delivery confirmation.

A second user interface 820 may be displayed once the user has selected the payment method (e.g. card based payment) with payment on delivery confirmation. The user is requested to enter his card details.

A third user interface 830 may be displayed by means of which the user is requested to choose an authentication method for payment confirmation. Once the authentication method chosen, authentication is implemented accordingly.

A fourth user interface 840 may be displayed to show the result of the authentication.

A fifth user interface 850 may be displayed to allow the user to select a delivery date.

A sixth user interface 860 may be displayed after delivery of the goods to allow the user to confirm delivery of the goods or alternately to cancel the payment transaction if the good have not been delivered as planned.

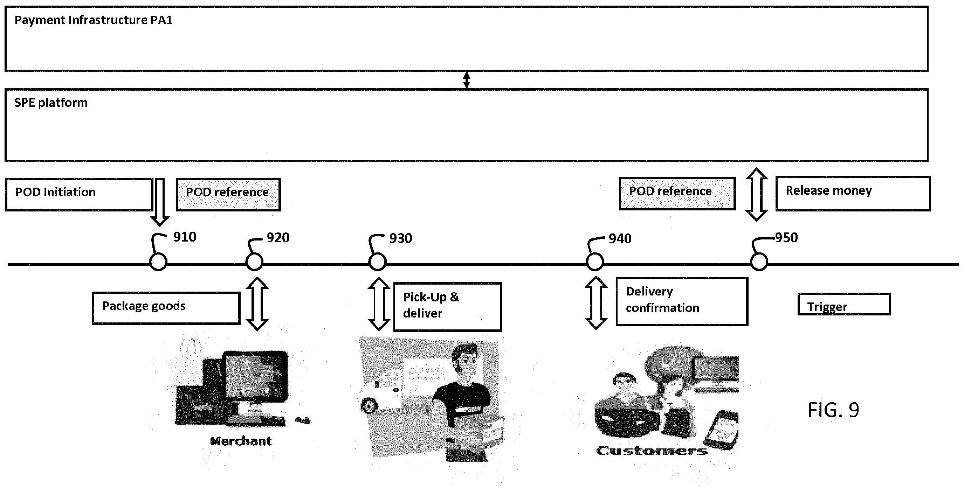

FIG. 9 illustrates aspects of a method for implementing a conditional payment transaction in accordance with an example. FIG. 9 illustrates how the payment platform SPE (e.g. one or more software control components (SPC1)) of may be used to correlate and synchronize payment transaction data processing steps and delivery data processing steps in an integrated manner on the basis of a token allocated to the POD transaction and shared between the payment platform (SPE) and / or payment gateway (PGW) and the payment infrastructure (PAI1).

In step 910, once the user has selected the goods from the web shop and selected a payment method, a payment on delivery (POD) transaction is initiated. The payment infrastructure PAI1 receives payment data from the web application of the merchant that specifies the payment scheme (e.g. card based payment) to be used and card details. A card based payment transaction is then initiated and interrupted before settlement of the payment. A token (POD reference) is allocated to the POD transaction and shared between the payment platform (SPE) and / or payment gateway (PGW) and the payment infrastructure (PAI1).

In step 920, on merchant side, upon receipt of an order for goods, the ordered goods are packed by the merchant.

In step 930, pickup and delivery of the goods is managed by the merchant. A delivery company receives a delivery request and picks up the goods to be delivered.

In step 940, the goods are delivered by the delivery company to a specified address (customer home or other) and delivery confirmation is sent by the delivery company and / or the customer.

In step 950, after delivery of the goods and once delivery of the goods is confirmed by the customer and / or the delivery company, the payment platform SPE receives the delivery information notification. For example the delivery information notification confirms the delivery of the goods. The payment platform SPE then retrieves the token (POD reference) of the POD transaction, requests the payment infrastructure PAI1 (e.g. through the payment gateway PGW) to trigger settlement of the card based payment transaction initiated in step 910 on the basis of the retrieved token.

It will be appreciated that the functions depicted and described herein may be implemented in software (e.g., via implementation of software on one or more processors, for executing on a general purpose computer (e.g., via execution by one or more processors) so as to implement a special purpose computer, or the like) and/or may be implemented in hardware (e.g., using a general purpose computer, one or more application specific integrated circuits (ASIC), and/or any other hardware equivalents).

It should be appreciated by those skilled in the art that any block diagrams herein represent conceptual views of illustrative circuitry embodying the principles of the invention. Similarly, it will be appreciated that any flow charts, flow diagrams, state transition diagrams, and the like represent various processes which may be substantially represented in computer readable medium and so executed by a computer or processor, whether or not such computer or processor is explicitly shown.

Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

A further aspect of the present disclosure is also a computer program product or computer program comprising a computer readable storage medium having computer readable program code embodied therein, the computer readable program code being configured to implement one of the method described herein when being loaded on a computer, a processor, or a programmable hardware component. In some embodiments, the computer readable storage medium is non-transitory.

It should be apparent that the teaching herein can be embodied in a wide variety of forms and that any specific structure and/or function disclosed herein is merely representative. In particular, one skilled in the art will appreciate that, unless otherwise stated, an embodiment disclosed herein can be implemented independently of any other embodiment and that several embodiments can be combined in various ways and that one or several aspects of different embodiments can be combined in various ways.

While aspects of the present disclosure have been particularly shown and described with reference to the embodiments above, it will be understood by those skilled in the art that various additional embodiments may be contemplated by the modification of the disclosed devices, systems and methods without departing from the scope of what is disclosed. Such embodiments should be understood to fall within the scope of the present disclosure as determined based upon the claims and any equivalents thereof.

## Claims

1. System for implementing a conditional payment transaction, the system comprising,
- a payment infrastructure (PAI1, PAI2) ;
- a payment platform (SPE) configured to execute at least one control software component (SPC1, SPC2) that implements a business logic underlying a business transaction, wherein the business transaction includes a payment transaction implemented by the payment infrastructure (PAI1, PAI2) between a merchant and a customer for goods ordered by the customer;
- a payment gateway (PGW) configured to execute at least one payment control functions to provide to the one or more control software components (SPC1, SPC2) a control over the payment transaction;
- an API gateway (AGW) configured to interconnect the at least one control software component (SPC1, SPC2) with one or more remote devices (CD1, CD2, CD3, CD4), CD3);
wherein the payment infrastructure (PAI1) is configured to
start an execution of a payment transaction for one or more goods ordered by the customer;
interrupt the execution of said payment transaction at a predefined transaction step; and
wait for at least one trigger from the payment gateway (PGW) before resuming the execution of said payment transaction
wherein the at least one control software component (SPC) is configured to
receive, from a remote device via the API gateway (AGW), delivery information notification during a delivery phase during which the one or more goods are delivered to the consumer;
determine on the basis of the delivery information notification that the one or more trigger conditions are fulfilled; and
trigger, upon determination that the one or more trigger conditions are fulfilled, the execution of the trigger function in order to resume the execution of the payment transaction.

2. The system according to claim 1, wherein the payment gateway (PGW) is configured to execute at least one payment control function that generates a trigger to trigger the execution of a next transaction step of the payment transaction.

3. The method according to claim 2,
- wherein the at least one control software component (SPC1, SPC2) is configured to determine, on the basis of the delivery information notification, the next transaction step to be executed;
- wherein the payment gateway (PGW) is configured to execute a trigger function configured to generate a trigger corresponding to the next transaction step to be executed.

4. The method according to claim 2 or 3, wherein the next transaction step to be executed comprises one or more operations among the set of operations consisting of: settlement of a payment, cancelling a payment transaction, changing an amount to be transferred, transfer of an asset, division of an asset, sending notification of acceptance of a credit, send notification of refusal of a credit, sending a request for assets and refund of transferred assets.

5. The system according to any of the preceding claims, wherein the payment platform (SPE) comprises a blockchain network comprises a plurality of nodes corresponding to parties to the business transaction and wherein the at least one control software component (SPC1, SPC2) implements a Smart Contract between parties to the business transaction.

6. Method for implementing a conditional payment transaction, the method comprising,
- executing, by a payment platform (SPE), at least one control software component (SPC1, SPC2) that implements a business logic underlying a business transaction, wherein the business transaction includes a payment transaction implemented by a payment infrastructure (PAI1, PAI2) between a merchant and a customer for goods ordered by the customer;
- executing, by a payment gateway (PGW), one or more payment control functions to provide to the one or more control software components (SPC1, SPC2) a control over the payment transaction;
- interconnecting, by an API gateway (AGW), the at least one control software component (SPC1, SPC2) with one or more remote devices (CD1, CD2, CD3, CD4), CD3);
- starting by the payment infrastructure (PAI1) an execution of a payment transaction for one or more goods ordered by the customer;
- interrupting by the payment infrastructure (PAI1) the execution of said payment transaction at a predefined transaction step and waiting for at least one trigger from the payment gateway (PGW) before resuming the execution of said payment transaction;
- receiving, by the control software component (SPC1, SPC2) from a remote device via the API gateway (AGW), delivery information notification during a delivery phase during which the one or more goods are delivered to the consumer;
- determining on the basis of the delivery information notification that one or more predefined trigger conditions are fulfilled; and
- triggering, upon determination that the one or more predefined conditions are fulfilled, the execution of the trigger function in order to resume the execution of the payment transaction.

7. The method according to claim 6, the method further comprising,
- generating, by a payment gateway (PGW), a trigger to trigger the execution of a next transaction step of the payment transaction.

8. The method according to claim 7, the method further comprising,
- determining, on the basis of the delivery information notification, the next transaction step to be executed;
- generating a trigger corresponding to the next transaction step to be executed.

9. The method according to any of claims 6 to 8, wherein the next transaction step to be executed comprises one or more operations among the set of operations consisting of:
settlement of a payment, cancelling a payment transaction, changing an amount to be transferred, transfer of an asset, division of an asset, sending notification of acceptance of a credit, send notification of refusal of a credit, sending a request for assets and refund of transferred assets.

10. A computer program product comprising computer readable instructions which, when loaded and executed by a computer, cause the computer to carry out the steps of the method according to any of claims 6 to 9.
